# EUROPEAN PATENT SPECIFICATION

(11) **EP 1 510 064 B1**
(45) Date of publication and mention of the grant of the patent: **29.10.2008**
(21) Application number: 02789114.2
(22) Date of filing: 27.11.2002
(51) Int. Cl.: H04M 11/06, H04Q 1/14

(54) **AN ARRANGEMENT IN A TELECOMMUNICATION SYSTEM**
ANORDNUNG IN EINEM TELEKOMMUNIKATIONSSYSTEM
AGENCEMENT DANS UN SYSTEME DE TELECOMMUNICATION

(30) Priority: 06.06.2002 US 385899 P
(43) Date of publication of application: 02.03.2005
(73) Proprietor: TELEFONAKTIEBOLAGET LM ERICSSON (publ), 164 83 Stockholm (SE)
(72) Inventor: SIMONSEN, Tom, DK-7600 Struer (DK); KRISTENSEN, Marinus, DK-7500 Holstebro (DK); ROOS, Sture, S-760 10 Bergshamra (SE)
(74) Representative: Sjöberg, Mats Hakan
(86) International application number: PCT/SE2002/002183
(87) International publication number: WO 2003/105456

(56) References cited:
- US-A- 4 245 342
- US-A- 5 970 088
- US-A- 6 014 431
- US-A- 6 160 843
- PATENT ABSTRACTS OF JAPAN vol. 2002, no. 12 12 December 2002 & JP 2002 247191 A (TOKYO METALLIC COMMUNICATIONS CORP) 30 August 2002

## Description

### TECHNICAL FIELD OF THE INVENTION

The present invention relates to an arrangement in a telecommunication system for connecting transmission lines to networks in the telecommunication system.

### DESCRIPTION OF RELATED ART

In telecommunication, digital transmission technology for high data transmission rate has been made available broadly among subscribers. They may for instance be multimedia interested people who want to download real time video or transfer large amounts of data, such as high resolution images or music files. The transmission technology is used both professionally and privately in people's residences.

For this broad use of digital transmission, existing analogue copper transmission lines, so called POTS lines, have been utilised of economical reasons. The use of the existing lines for digital transmission requires some new devices to be added to the transmission system.

On the subscriber side a high speed modem is required for the data transmission and a splitter/combiner with a bidirectional low pass filter for connecting e.g. both a PC and a common telephone to the copper line. On the station side a similar high speed modem and a splitter/combiner with low pass filter is required for connecting the copper line to a data transmission network and to a public telephone network.

To broadly realize a transmission system of the abovementioned type can be very expensive, both in terms of equipment and in the amount of work to be done. Therefore a lot of work is going on to bring about a pool with the equipment on the station side.

In the international patent publication No. WO0237820 is shown a system for facilitating the connection of a broadband subscriber. Via a standard subscriber modem and a control server the subscriber himself can connect a high speed modem of a modem pool to a filter in a filter bank. Manual connection in a cross connector at the station side is thereby avoided.

In the patent US 5,970,088 is described an apparatus for reducing reverse channel near end crosstalk noise in a modem pool. A new high-speed DSL modem for long twisted-pair lines is presented. The modems are placed in a pool in the switch room of a central office. Close to the switch room the central office has a frame room for a main distribution frame to which subscriber lines are connected. The DSL modem pools connected by wires to the main distribution frame.

In spite of the above mentioned improvements the installation of the equipment on the station side still requires a lot of work. In a commonly used solution with sub-racks for a filter pool and for a modem pool, a wiring and rewiring is required between the sub-racks and a cross connecting location. This wiring and rewiring can have a length of e.g. 100 meters and is very expensive to perform. When using the solution errors are also easily introduced, which adds further costs.

### SUMMARY OF THE INVENTION

In the present invention the main problem has been observed how to get a simple arrangement for a modem pool in a telecommunications system for high speed transmission over analogue transmission lines.

A further problem is how to avoid wiring and rewiring when installing the modem pool.

Still a problem is how to avoid erroneous connections when installing the modem pool.

Still another problem is how to arrange the modem pool for signal transmission over the analogue lines in separate frequency bands.

The problems are solved by producing a modem pool for high speed transmission and installing it directly in a Main Distribution Frame MDF, which connects subscriber lines to networks in the telecommunication system.

Some more in detail the problem is solved by the full working modem pool being formed as a unit that is installed in the MDF. In an embodiment the unit is formed as a plug in unit. The modem pool can be combined with a frequency splitter and filter to make transmission over the analogue lines in separate frequency bands possible.

A purpose with the invention is to get a simple unit that facilitates the installation of the modem pool in the network side equipment.

Another purpose is to avoid extra wires to the modem pool and to avoid the wiring and rewiring when installing the modem pool.

Still a purpose is to avoid erroneous connections when installing the modem pool.

Still another purpose is to facilitate transmission over the analogue lines in separate frequency bands.

An advantage with the invention is that the installation of the modem pool is very simple.

Another advantage is that the wiring and rewiring when installing the modem pool can be avoided.

Still an advantage is that all existing wiring can be used.

Still another advantage is that errors in the connections to the modem pool can easily be avoided.

An advantage is also that transmission over analogue lines in separate frequency bands is facilitated.

The invention will now be described more closely with the aid of preferred embodiments and with reference to enclosed figures.

### BRIEF DESCRIPTION OF THE DRAWINGS

Figure 1 shows a block schematic over a prior art telecommunication system;
Figure 2 shows a block schematic over a first embodiment of the invention;
Figure 3 shows a block schematic over a second embodiment of the invention;
Figure 4 shows a block schematic over a third embodiment of the invention;
Figure 5 shows a block schematic over a fourth embodiment of the invention;
Figure 6 shows a block schematic over an all digital mode embodiment of the invention.
Figure 7 shows a view over a plug-in MDF; and
Figure 8 shows a coupling scheme for connecting a modem pool.

### DETAILED DESCRIPTION OF EMBODIMENTS

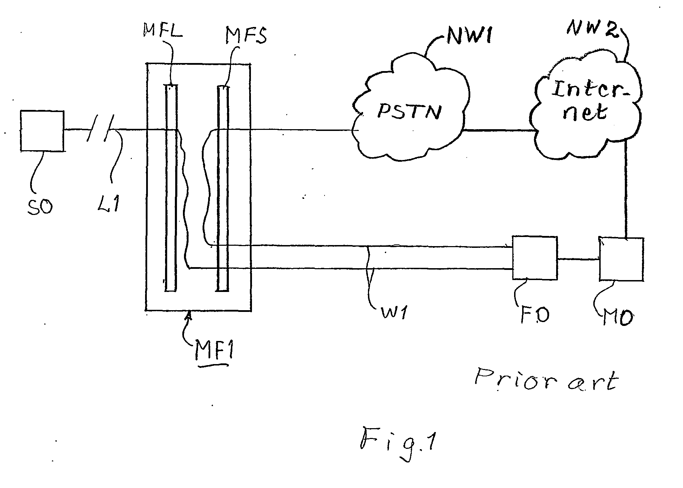

Figure 1 shows a prior art telecommunication system. A subscriber S0 has a conventional telephone, a PC and a modem and is connected to a main distribution frame MF1 via a copper line L1. The main distribution frame is in turn connected to a PSTN network NW1 and has a line side MFL and a station side MFS. A modem pool M0 for high speed modems and a filter bank F0 are in conventional manner placed in a rack at a separate location. The modem pool is connected to an Internet network NW2, which is connected to the network NW1. When the subscriber S0 wants to connect the PC to the network NW2 via a high speed modem, it is necessary to perform a wiring and rewiring W1 from the main distribution frame MF1 to the location for the filter F0 and the modem pool M0. The distance can e.g. be of the order of 100 meters and the wiring is expensive to perform. There is also a risk that an error will arise during the wiring, which adds further costs. In spite of that, with earlier technology it laid near at hand to place the modem pool M1 at the separate location. The high speed modems required good amplifiers, which had high power dissipation, and it was natural to handle problems related to that at a common location.

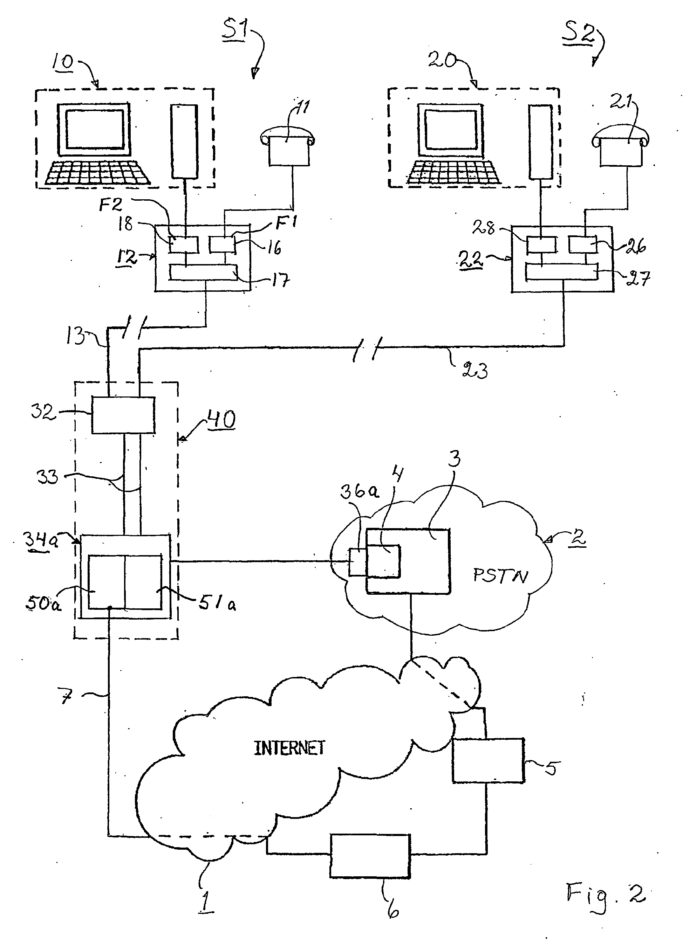

Figure 2 shows a telecommunication system for high and low speed transmission in two separate frequency bands. The system includes an Internet 1 connected to a public telephone network (PSTN) 2 and a first and second subscriber S1 respective S2. The PSTN 2 has a central office 3 with a set of line cards 4 and the Internet 1 is connected to a broadband access control server 5 and a management system 6. The Internet and the PSTN are both connected to a main distribution frame (MDF) 40, which will be more closely described below. The first subscriber S1 has a user terminal 10 and a telephone 11, which are both connected to a network terminal 12. This terminal has a PSTN user port 16 for a low frequency band F1 connected to the telephone 11, an xDSL user modem 18 for a high frequency band F2 connected to the terminal 10 and a user splitter and filter 17 connected to the port 16 and the modem 18. The splitter and filter 17 distinguishes between signals in the separate frequency bands F1 and F2. Similarily, the second subscriber S2 has a user terminal 20 and a telephone 21, which are connected to a network terminal 22. This terminal has a PSTN user port 26 for the band F1 connected to the telephone 21, an xDSL user modem 28 for the band F2 connected to the terminal 20 and a user splitter and filter 27 connected to the port 26 and the modem 28. The splitter and filter 27 distinguishes between signals in the separate frequency bands F1 and F2. The network terminals 12 and 22 operate as gateways between the users S1 and S2 and the telecommunication system, and are connected to the MDF 40 via copper cables 13 respective 23, which are parts of the telecommunications lines between the subscribers and the telecommunication system.

The MDF 40 includes an MDF line side device 32 that is connected to the cables 13 and 23. The MDF 40 has a station side device 34a, which includes a modem pool 50a of high speed modems and a frequency splitter 51a. The device 34a is connected to the line side device 32 by so called jumpers 33 and to the PSWTN2. A filter arrangement 36a, which is placed outside the MDF 40 next to the set of line cards 4, is connected to the station side device 34a. The modem pool 50a is connected directly to the Internet 1 by a LAN cable 7. The arrangement requires no extra wiring to the modem pool 50a when the subscribers want to connect to the Internet, as the modem pool is located in the MDF 40.

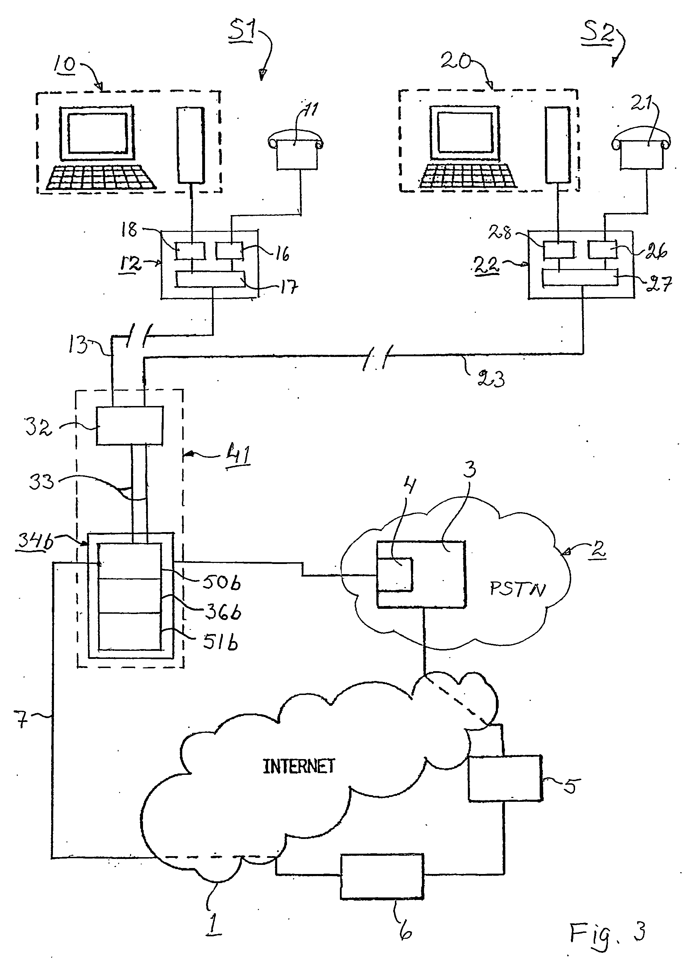

In figure 3 is shown an alternative MDF 41, which includes the MDF line side device 32 that is connected to the cables 13 and 23. The MDF 41 has a station side device 34b, which includes a modem pool 50b of high speed modems and also a filter arrangement 36b. The station side device 34b in this embodiment also includes a splitter device 51b and is connected to the set of line cards 4 in the PSTN 2. The modem pool 50b is directly connected to the Internet 1 via the LAN cable 7. The arrangement requires no extra wiring to the modem pool 50b as it is located in the MDF 41.

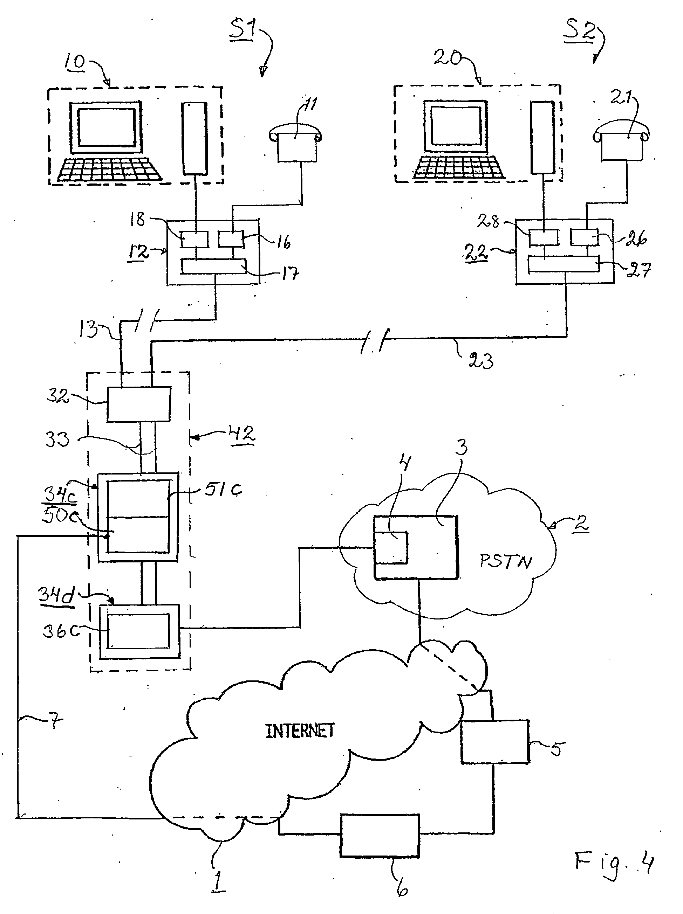

Figure 4 shows a further alternative MDF 42, which includes the MDF line side device 32 connected to the cables 13 and 23. The MDF 42 also includes a first MDF station side device 34c which is connected to the line side device 32 via the jumpers 33. The first MDF station side device 34c includes a modem pool 50c of high speed modems and a splitter device 51c. The modem pool 50c is directly connected to the Internet 1 by the LAN cable 7. The MDF 42 also has a second MDF station side device 34d, which includes a filter arrangement 36c and is connected to the set of line cards 4. This embodiment requires some extra wiring between the first and second MDF station side devices 34c and 34d, but this wireing is internal in the MDF 42.

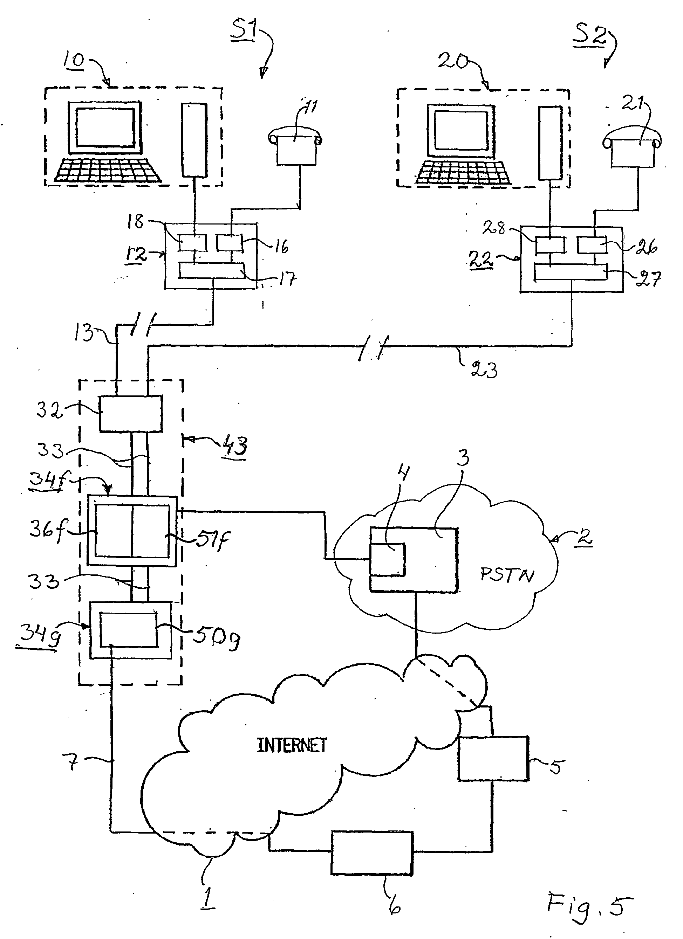

Figure 5 shows still an alternative MDF 43 which includes the MDF line side device 32 that is connected to the cables 13 and 23. The MDF 43 also includes a third MDF station side device 34f which is connected to the line side device 32 via the jumpers 33. The third MDF station side device 34f includes a filter arrangement 36f and a splitter device 51f and is connected to the set of line cards 4. A fourth MDF station side device 34g includes a modem pool 50g of high speed modems, which is directly connected to the Internet 1 via the LAN cable 7. Also this embodiment requires some extra wiring internally in the MDF for the fourth MDF station side device 34g.

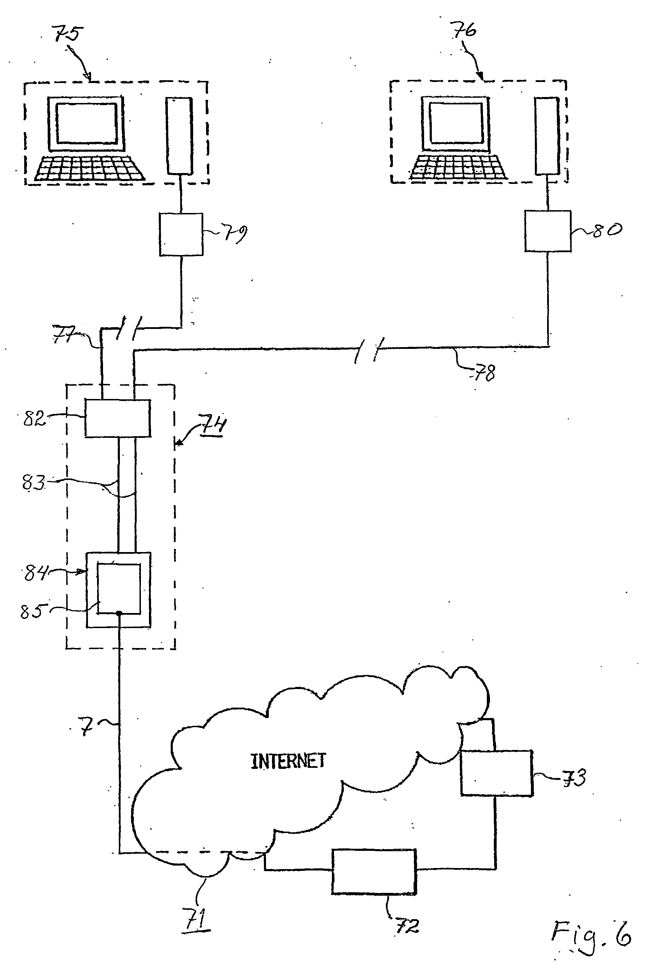

In figure 6 is shown a telecommunication system with an all digital mode embodiment for transmission in only one frequency band. The system includes an Internet 71 connected to a broadband access control server 72 and a management system 73. The Internet is also connected in a main distribution frame MDF 74, which in turn is connected to user terminals 75 and 76 via copper cables 77 respective 78 with xDSL user modems 79 respective 80. The MDF includes a line side device 82 which is connected to the cables 77 and 78. The line side device 82 is connected via jumpers 83 to a station side device 84 having a modem pool 85 of high speed modems. The modem pool 85 is in turn directly connected to the Internet 1 via the LAN cable 7.

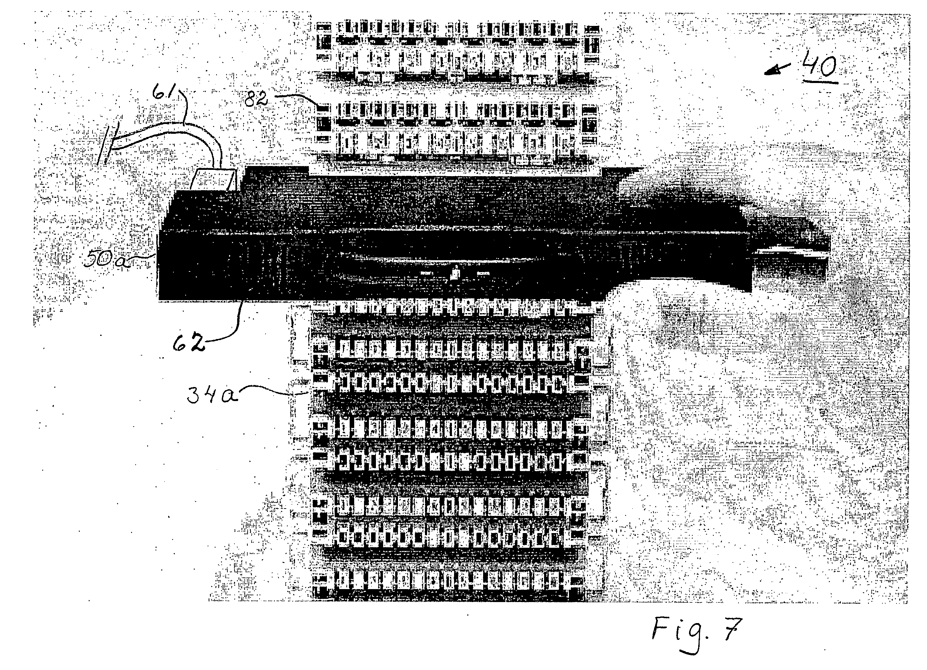

In an advantageous embodiment the modem pool is a plug-in unit as is shown in figure 7. In the exemplifying embodiment the modem pool 50a has a plug-in connection for connecting to the MDF station side device 34a. so, for a new Digital Subscriber Line (DSL) installation, or when DSL is introduced in an existing PSTN structure, the full working DSL modem pool 50a is plugged in into the MDF 40. The MDF can be an existing one in an already existing PSTN structure.

The exemplified modem pool 50a in figure 7 has eight high speed modems for eight subscribers. A LAN cable 61 for connection to ethernet is plugged in to the modem pool, which also gets its power supply via the LAN cable, so called "Power over LAN". The LAN cable 61 corresponds to LAN cable 7 in the figures 2-6. The modem pool 50a also includes other functions such as overvoltage protection. The eight modems in the pool are equipped with amplifiers, which are developed to have very low power consumption. This low power consumption is a requirement to make it possible for the small cabinet on the figure to hold the eight modems. The cabinet is air cooled by a small fan behind the grating 62. It can be mentioned that with earlier technology a modem pool for eight subscribers is a printed circuit board that has the size of an A4 paper sheet and which is placed in a rack together with other modem pool circuit boards.

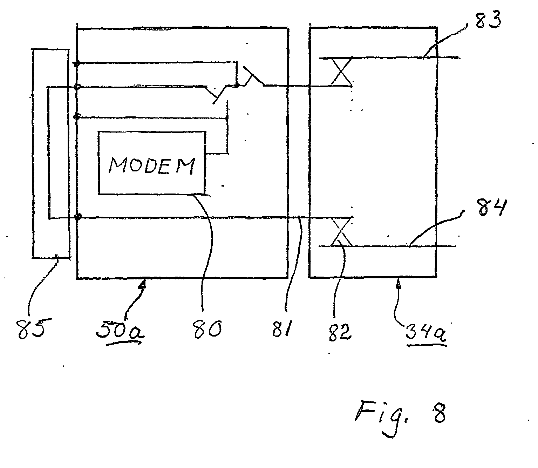

In figure 8 is shown, with a simple scheme, how the modem pool 50a is connected to the station side device 34a. The modem pool has modems 80 connected to pins 81. These are masking electrical contact at locations 82 with connections 83 and 84 to the jumpers 33 respective to the networks 1 and 2. Electrical contact arises at the locations 82 when the modem pool 50a is plugged in with the pins 81 into the station side device 34a. A unit 85 for test access is also shown.

The installing of the modem pool 50a-50g and 85 in the MDF 40, 41, 42, 43 or 74 gives some advantages. Existing wiring is used and for the embodiments with MDF 40 or 41 no extra wiring at all to the modem pool is needed. This simplifies the installation of the modem pool and especially if the modem pool is formed as a plug in unit the installation is simplified. Furthermore the risk for wrongly connecting the modem pool is minimised.

## Claims

1. An arrangement for use in a telecommunication system for connecting transmission lines (13, 23; 77, 78) to at least one network (1,2;71) in the telecommunication system, the arrangement including:
- a main distribution frame (40-43,74) in which is located a line side device (32;82) for connection to said transmission lines (13,23;77,78) and a station side device (34a,34b;34c,d;34f,g;84) for connection to said network (1,2); and
- a modem pool (50a,b,c,g;85) with high speed modems,
**characterised in that** said modem pool (50a,b,c,g;85) is connected directly in said main distribution frame (40-43,74).

2. An arrangement for use in a telecommunication system according to claim 1, **characterised in that** said station side device (34a,34b;34c,d;34f,g;84) includes said modem pool (50a, b, c, g; 85) .

3. An arrangement for use in a telecommunication system according to claim 1, **characterised in that** the system is intended for at least two separate transmission frequency bands (F1,F2) and the arrangement includes a splitter device (51a,b,c,f) and a filter arrangement (36a,b,c,f) for handling signals in said transmission frequency bands (F1,F2).

4. An arrangement for use in a telecommunication system according to claim 3, **characterised in that** the station side device (34a) includes the modem pool (50a) and the splitter device (51a),

5. An arrangement for use in a telecommunication system according to claim 3, **characterised in that** the station side device (34b) includes the modem pool (50b), the splitter device (51b) and the filter arrangement (36b).

6. An arrangement for use in a telecommunication system according to claim 3, **characterised in that** the station side device includes both a first station side device (34c), having the modem pool (50c) and the splitter device (51c), and also a second station side device (34d), having the filter arrangement (36c).

7. An arrangement for use in a telecommunication system according to claim 3, **characterised in that** the station side device includes both a third station side device (34f), having the filter arrangement (36f) and the splitter device (51f), and also a fourth station side device (34g), having the modem pool (50g).

## Patentansprüche

1. Anordnung zur Verwendung in einem Telekommunikationssystem zum Verbinden von Übertragungsleitungen (13, 23; 77, 78) mit wenigstens einem Netzwerk (1, 2; 71) in dem Telekommunikationssystem, wobei die Anordnung enthält:
- einen Hauptverteilungs-Frame (40-43, 74), in welchem sich eine leitungsseitige Vorrichtung (32; 82) zur Verbindung mit den Übertragungsleitungen (13, 23; 77, 78) und eine stationsseitige Vorrichtung (34a, 34b; 34c, d; 34f, g; 84) zur Verbindung mit dem Netzwerk (1, 2) befinden; und
- einen Modempool (50a, b, c, g; 85) mit Hochgeschwindigkeitsmodems,
**dadurch gekennzeichnet, dass** der Modempool (50a, b, c, g; 85) direkt in dem Hauptverteilungs-Frame (40-43, 74) verbunden ist.

2. Anordnung zur Verwendung in einem Telekommunikationssystem gemäß Anspruch 1, **dadurch gekennzeichnet, dass** die stationsseitige Vorrichtung (34a, 34b; 34c, d; 34f, g; 84) den Modempool (50a, b, c, g; 85) enthält.

3. Anordnung zur Verwendung in einem Telekommunikationssystem gemäß Anspruch 1, **dadurch gekennzeichnet, dass** das System für wenigstens zwei separate Übertragungsfrequenzbänder (F1, F2) beabsichtigt ist, und dass die Anordnung eine Splitter-Vorrichtung (51a, b, c, f) und eine Filteranordnung (36a, b, c, f) zur Handhabung von Signalen in den Übertragungsfrequenzbändern (F1, F2) enthält.

4. Anordnung zur Verwendung in einem Telekommunikationssystem gemäß Anspruch 3, **dadurch gekennzeichnet, dass** die stationsseitige Vorrichtung (34a) den Modempool (50a) und die Splitter-Vorrichtung (51a) enthält.

5. Anordnung zur Verwendung in einem Telekommunikationssystem gemäß Anspruch 3, **dadurch gekennzeichnet, dass** die stationsseitige Vorrichtung (34b) den Modempool (50b), die Splitter-Vorrichtung (51b) und die Filteranordnung (36b) enthält.

6. Anordnung zur Verwendung in einem Telekommunikationssystem gemäß Anspruch 3, **dadurch gekennzeichnet, dass** die stationsseitige Vorrichtung sowohl eine erste stationsseitige Vorrichtung (34c) mit dem Modempool (50c) und der Splitter-Vorrichtung (51c) als auch eine zweite stationsseitige Vorrichtung (34d) mit der Filteranordnung (36c) enthält.

7. Anordnung zur Verwendung in einem Telekommunikationssystem gemäß Anspruch 3, **dadurch gekennzeichnet, dass** die stationsseitige Vorrichtung sowohl eine dritte stationsseitige Vorrichtung (34f) mit der Filteranordnung (36f) und der Splitter-Vorrichtung (51f) als auch eine vierte stationsseitige Vorrichtung (34g) mit dem Modempool (50g) enthält.

## Revendications

1. Agencement pour utilisation dans un système de télécommunications pour connecter des lignes (13, 23 ; 77, 78) de transmission à au moins un réseau (1, 2 ; 71) dans le système de télécommunications, l'agencement incluant :
- un répartiteur principal (40 à 43, 74) dans lequel est situé un dispositif (32 ; 82) de côté ligne pour connexion auxdites lignes (13, 23 ; 77, 78) de transmission et un dispositif (34a, 34b ; 34c, d ; 34f, g ; 84) de côté station pour connexion audit réseau (1, 2) ; et
- un pool (50a, b, c, g ; 85) de modems avec des modems à grande vitesse ;
**caractérisé en ce que** ledit pool (50a, b, c, g ; 85) de modems est connecté directement audit répartiteur principal (40 à 43, 74).

2. Agencement pour utilisation dans un système de télécommunications selon la revendication 1, **caractérisé en ce que** ledit dispositif (34a, 34b ; 34c, d ; 34f, g ; 84) de côté station comprend ledit pool (50a, b, c, g ; 85) de modems.

3. Agencement pour utilisation dans un système de télécommunications selon la revendication 1 **caractérisé en ce que** le système est prévu pour au moins deux bandes distinctes (F1, F2) de fréquences de transmission et **en ce que** l'agencement comprend un dispositif séparateur (51a, b, c, f) et un agencement (36a, b, c, f) de filtres pour manipuler des signaux dans lesdites bandes (F1, F2) de fréquences de transmission.

4. Agencement pour utilisation dans un système de télécommunications selon la revendication 3, **caractérisé en ce que** le dispositif (34a) de côté station comprend le pool (50a) de modems et le dispositif séparateur (51a).

5. Agencement pour utilisation dans un système de télécommunications selon la revendication 3, **caractérisé en ce que** le dispositif (34b) de côté station comprend le pool (50b) de modems, le dispositif séparateur (51b) et l'agencement (36b) de filtres.

6. Agencement pour utilisation dans un système de télécommunications selon la revendication 3, **caractérisé en ce que** le dispositif de côté station comprend à la fois un premier dispositif (34c) de côté station, comportant le pool (50c) de modems et le dispositif séparateur (51c), et aussi un deuxième dispositif (34d) de côté station, comportant l'agencement (36c) de filtres.

7. Agencement pour utilisation dans un système de télécommunications selon la revendication 3, **caractérisé en ce que** le dispositif de côté station comprend à la fois un troisième dispositif (34f) de côté station, comportant l'agencement (36f) de filtres et le dispositif séparateur (51f), et aussi un quatrième dispositif (34g) de côté station, comportant le pool (50g) de modems.
